(19) Europäisches Patentamt
European Patent Office
Office européen des brevets

(11) Publication number: 0 507 173 B1

(12) # EUROPEAN PATENT SPECIFICATION

(45) Date of publication of patent specification: **18.10.95**

(51) Int. Cl.[6]: **C08G 18/08**, C08G 18/76, C09D 175/06

(21) Application number: **92104973.0**

(22) Date of filing: **23.03.92**

The file contains technical information submitted after the application was filed and not included in this specification

(54) **Aqueous polyurethane-urea dispersions based on bis-(4-isocyanatocyclohexyl)-methane enriched in the trans,trans-isomer and coatings or films prepared therefrom.**

(30) Priority: **05.04.91 US 681020**

(43) Date of publication of application:
**07.10.92 Bulletin 92/41**

(45) Publication of the grant of the patent:
**18.10.95 Bulletin 95/42**

(84) Designated Contracting States:
**BE DE ES GB IT NL**

(56) References cited:
**EP-A- 0 300 335**
**EP-A- 0 390 370**
**EP-A- 0 404 371**
**EP-A- 0 426 883**
**WO-A-90/09404**
**DE-A- 2 624 442**

(73) Proprietor: **Bayer Corporation**
**One Mellon Center**
**500 Grant Street**
**Pittsburgh, PA 15219-2502 (US)**

(72) Inventor: **Seneker, Stephen D.**
**902 Meadow Heights**
**Paden City, WV 26159 (US)**
Inventor: **Tirpak, Robin E.**
**42 Baytree Drive**
**Wheeling, WV 26003 (US)**
Inventor: **Venham, Lanny D.**
**41 North 3rd Avenue**
**Paden City, WV 26159 (US)**
Inventor: **Siranovich, Stanley F.**
**104 Walden Way**
**Imperial, PA 15126 (US)**

(74) Representative: **Petrovicki, Wolfgang, Dr. et al**
**Bayer AG**
**Konzernverwaltung RP**
**Patente Konzern**
**D-51368 Leverkusen (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

### BACKGROUND OF THE INVENTION

#### Field of the Invention

The present invention is directed to aqueous polyurethane-urea dispersions which have been prepared using bis-(4-isocyanatocyclohexyl)-methane enriched in the trans,trans-isomer as at least a portion of the isocyanate component and to coatings or films prepared therefrom.

#### Description of the Prior Art

The production of linear or cross-linked aqueous polyurethane-urea dispersions is known as shown by U.S. Patents 3,479,310; 4,066,591; 4,092,286; 4,108,814; 4,237,264; and 4,238,378 which disclose linear polyurethane-ureas and U.S. Patents 3,870,684 4,203,883 and 4,408,008, which disclose cross-linked polyurethane-ureas. The aqueous polyurethane-urea dispersions may be used for a wide range of commercial applications such as adhesives or coatings for various substrates including textile fabrics, plastic, wood, glass fibers and metals. Chemical resistance, abrasion resistance, toughness, tensile strength, elasticity and durability are among the many desirable properties of these coatings. In some cases these properties of coatings prepared from aqueous polyurethane-urea dispersions have equaled or even surpassed the performance levels of coatings obtained from solvent-based polyurethane lacquers.

Regardless of the property level which may be obtained for coatings prepared from commercial polyurethane-urea dispersions, there is always a further need to increase these properties. Many of the commercial aqueous polyurethane-urea dispersions are prepared using bis-(4-isocyanatocyclohexyl)-methane as the isocyanate component. The use of this diisocyanate in place of other available diisocyanates is responsible for many of the outstanding properties which may be obtained from polyurethane-urea dispersions.

Bis-(4-isocyanatocyclohexyl)-methane is not made up of a single isomer, but rather contains a mixture of isomers. The commercially available diisocyanate which is used to prepare the aqueous polyurethane-urea dispersions has a trans,trans isomer content of 20 to 25% by weight.

It is an object of the present invention to provide aqueous polyurethane-urea dispersions which can be used to prepare coatings which possess improved properties, especially hardness, yield stress, modulus and solvent resistance.

Surprisingly, this object may be achieved in accordance with the present invention by preparing the aqueous polyurethane-urea dispersions from bis-(4-isocyanatocyclohexyl)-methane having an enriched trans,trans isomer content of at least 35% by weight.

### SUMMARY OF THE INVENTION

The present invention is directed to aqueous polyurethane-urea dispersions wherein the polyurethane-ureas are based on the reaction product of

a) an isocyanate component comprising bis-(4-isocyanatocyclohexyl)-methane having an average trans,trans isomer content of at least 35% by weight, based on the weight of bis-(4-isocyanatocyclohexyl)-methane with

b) an isocyanate-reactive component.

The present invention is also directed to the films or coatings prepared from these aqueous polyurethane-urea dispersions.

### DETAILED DESCRIPTION OF THE INVENTION

In accordance with the present invention the aqueous polyurethane-urea dispersions are formed in known manner using conventional starting materials. Any of the known processes and starting materials may be used for preparing the dispersions with the only requirement being that the isocyanate component contain bis-(4-isocyanatocyclohexyl)-methane having an average trans,trans isomer content of at least 35% by weight, preferably at least 48% by weight, more preferably 70% by weight and most preferably at least 95% by weight. Methods of preparing bis-(4-isocyanatocyclohexyl)-methane having various trans,trans isomer contents are also known in the art.

For example, if bis-(4-aminophenyl)-methane is hydrogenated to the corresponding cyclohexyl compound, the mixture can contain up to about 50% by weight of the trans,trans isomer. The hydrogenated amine mixture can be subjected to a crystallization process to obtain an amine mixture having a higher trans,trans isomer content i.e., up to about 80% by weight. Suitable processes are disclosed in U.S. Patents 2,494,563, 5,153,088, 3,384,661 and 3,393,236. Subsequent blending of amine mixtures having different trans,trans isomer contents can be used to produce other trans,trans isomer contents. Phosgenation of the amine mixtures will produce the corresponding mixture of diisocyanates containing the same trans,trans isomer as the amine mixture.

In addition, methods exist for separating the trans,trans isomer from the remaining isomers in the diisocyanate mixtures. For example, a solvent crystallization process is disclosed in U.S. Patent 4,983,763 and a melt crystallization process is disclosed in U.S. Patent 5,175,350. By using diisocyanate mixtures containing varying amounts of the trans,trans isomer, e.g., 20%, 50% and virtually 100% by weight, it is possible to prepare mixtures of bis-(4-isocyanatocyclohexyl)-methane having any desired trans,trans isomer content for use in accordance with the present invention.

The aqueous polyurethane-urea dispersions are preferably prepared by a two-stage process wherein an isocyanate-terminated prepolymer is formed in the first stage by reacting an excess of an isocyanate component containing bis-(4-isocyanatocyclohexyl)-methane having a trans,trans isomer content of at least 35% with an isocyanate-reactive component as discussed in more detail hereinafter. The isocyanate-terminated prepolymer is then chain extended in a second stage to form the polyurethane-urea either before, during or after being mixed with an aqueous medium. However, it is possible to prepare the polyurethane-ureas in a one-step process in accordance with U.S. Patent 3,479,310 to be discussed hereinafter, even though the formation of a prepolymer is preferred when conducting this process.

In accordance with the present invention it is also possible to use blends of the required bis-(4-isocyanatocyclohexyl)-methane isomer mixture with up to 80% by weight, preferably up to 50% by weight, based on the weight of the isocyanate component, with other known polyisocyanates. Examples of suitable polyisocyanates which may optionally be used as a portion of the isocyanate component in accordance with the present invention are organic diisocyanates represented by the formula

$$R(NCO)_2$$

in which R represents an organic group obtained by removing the isocyanate groups from an organic diisocyanate having a molecular weight of from about 112 to 1,000, and preferably from about 140 to 400. Diisocyanates preferred for the process according to the invention are those represented by the above formula in which R represents a divalent aliphatic hydrocarbon group having from 4 to 18 carbon atoms, a divalent cycloaliphatic hydrocarbon group having from 5 to 15 carbon atoms, a divalent araliphatic hydrocarbon group having from 7 to 15 carbon atoms or a divalent aromatic hydrocarbon group having 6 to 15 carbon atoms. Examples of the organic diisocyanates which are particularly suitable include 1,4-tetramethylene diisocyanate, 1,6-hexamethylene diisocyanate, 2,2,4-trimethyl-1,6-hexamethylene diisocyanate, 1,12-dodecamethylene diisocyanate, cyclohexane-1,3- and -1,4-diisocyanate, 1-isocyanato-2-isocyanatomethyl cyclopentane, 1-isocyanato-3-isocyanatomethyl-3,5,5-trimethylcyclohexane (isophorone diisocyanate or IPDI), bis-(4-isocyanatocyclohexyl)-methane, 1,3- and 1,4-bis-(isocyanatomethyl)-cyclohexane, bis-(4-isocyanato-3-methyl-cyclohexyl)-methane, $\alpha,\alpha,\alpha',\alpha'$-tetramethyl-1,3- and/or -1,4-xylylene diisocyanate, 1-isocyanato-1-methyl-4(3)-isocyanatomethyl cyclohexane, 2,4- and/or 2,6-hexahydrotoluylene diisocyanate, 1,3- and/or 1,4-phenylene diisocyanate, 2,4- and/or 2,6-toluylene diisocyanate, 2,4- and/or 4,4'-diphenylmethane diisocyanate and 1,5-diisocyanato naphthalene and mixtures thereof. Aromatic polyisocyanates containing 3 or more isocyanate groups such as 4,4',4''-triphenylmethane diisocyanate and polyphenyl polymethylene polyisocyanates obtained by phosgenating aniline/formaldehyde condensates may also be used. Preferred diisocyanates which may be blended with the required bis-(4-isocyanatocyclohexyl)-methane isomers are 1,6-hexamethylene diisocyanate and isophorone diisocyanate.

The organic compounds containing at least two isocyanate-reactive groups which are reacted with the previously described organic diisocyanates to prepare the isocyanate-terminated prepolymers can be divided into two groups, i.e., high molecular weight compounds with molecular weights from 400 to about 6,000, preferably from 800 to about 3,000, and low molecular weight compounds with molecular weights below 400. The molecular weights are number average molecular weights ($M_n$) and are determined by end group analysis (OH number). Examples of the high molecular weight compounds are polyester polyols, polyether polyols, polyhydroxy polycarbonates, polyhydroxy polyacetals, polyhydroxy polyacrylates, polyhydroxy polyester amides and polyhydroxy polythioethers. The polyester polyols, polyether polyols and polyhydroxy polycarbonates are preferred.

Suitable polyester polyols include reaction products of polyhydric, preferably dihydric alcohols to which trihydric alcohols may be added and polybasic, preferably dibasic carboxylic acids. Instead of these polycarboxylic acids, the corresponding carboxylic acid anhydrides or polycarboxylic acid esters of lower alcohols or mixtures thereof may be used for preparing the polyesters. The polycarboxylic acids may be aliphatic, cycloaliphatic, aromatic and/or heterocyclic and they may be substituted, e.g. by halogen atoms, and/or unsaturated. The following are mentioned as examples: succinic acid; adipic acid; suberic acid; azelaic acid; sebacic acid; phthalic acid; isophthalic acid; trimellitic acid; phthalic acid anhydride; tetrahydrophthalic acid anhydride; hexahydrophthalic acid anhydride; tetrachlorophthalic acid anhydride, endomethylene tetrahydrophthalic acid anhydride; glutaric acid anhydride; maleic acid; maleic acid anhydride; fumaric acid; dimeric and trimeric fatty acids such as oleic acid, which may be mixed with monomeric fatty acids; dimethyl terephthalates and bis-glycol terephthalate. Suitable polyhydric alcohols include, e.g. ethylene glycol; propylene glycol-(1,2) and -(1,3); butylene glycol-(1,4) and -(1,3); hexanediol-(1,6); octanediol-(1,8); neopentyl glycol; cyclohexanedimethanol (1,4-bis-hydroxymethylcyclohexane); 2-methyl-1,3-propanediol; 2,2,4-trimethyl-1,3-pentanediol; triethylene glycol; tetraethylene glycol; polyethylene glycol; dipropylene glycol; polypropylene glycol; dibutylene glycol and polybutylene glycol, glycerine and trimethlyolpropane. The polyesters may also contain a portion of carboxyl end groups. Polyesters of lactones, e.g. ε-caprolactone or hydroxycarboxylic acids, e.g. ω-hydroxycaproic acid, may also be used.

Polycarbonates containing hydroxyl groups include those known per se such as the products obtained from the reaction of diols such as propanediol-(1,3), butanediol-(1,4) and/or hexanediol-(1,6), diethylene glycol, triethylene glycol or tetraethylene glycol with phosgene, diarylcarbonates such as diphenylcarbonate or with cyclic carbonates such as ethylene or propylene carbonate. Also suitable are polyester carbonates obtained from the above-mentioned polyesters or polylactones with phosgene, diaryl carbonates or cyclic carbonates.

Suitable polyether polyols are obtained in known manner by the reaction of starting compounds which contain reactive hydrogen atoms with alkylene oxides such as ethylene oxide, propylene oxide, butylene oxide, styrene oxide, tetrahydrofuran, epichlorohydrin or mixtures of these alkylene oxides. It is preferred that the polyethers do not contain more than about 10% by weight of ethylene oxide units. Most preferably, polyethers obtained without the addition of ethylene oxide are used. Suitable starting compounds containing reactive hydrogen atoms include the polyhydric alcohols set forth for preparing the polyester polyols and, in addition, water, methanol, ethanol, 1,2,6-hexane triol, 1,2,4-butane triol, trimethylol ethane, pentaerythritol, mannitol, sorbitol, methyl glycoside, sucrose, phenol, isononyl phenol, resorcinol, hydroquinone, 1,1,1- or 1,1,2-tris-(hydroxylphenyl)-ethane.

Polyethers which have been obtained by the reaction of starting compounds containing amine compounds can also be used, but are less preferred for use in the present invention. Suitable amine starting compounds include ammonia, methyl amine, tetramethylene diamine, ethanolamine, diethanolamine, triethanolamine, ethylene diamine, diethylene triamine, triethylene tetramine, 1,6-hexane diamine, piperazine, 2,5-dimethyl piperazine, 1-amino-3-aminomethyl-3,3,5-trimethyl cyclohexane, bis-(4-aminocyclohexyl)-methane, bis-(4-amino-3-methylcyclohexyl)-methane, 1,4-cyclohexane diamine, 1,2-propane diamine, hydrazine, aminoacid hydrazides, hydrazides of semicarbazido carboxylic acids, bis-hydrazides, bis-semicarbazides, aniline, phenylene diamine, 2,4- and 2,6-toluylene diamine, polyphenylene polymethylene polyamines of the kind obtained by the aniline/formaldehyde condensation reaction and mixtures thereof. Resinous materials such as phenol and cresol resins may be used as the starting materials.

Polyethers modified by vinyl polymers are also suitable for the process according to the invention. Products of this kind may be obtained by polymerizing, e.g. styrene and acrylonitrile in the presence of polyethers (U.S. Patent Nos. 3,383,351; 3,304,273; 3,523,095; 3,110,695 and German Patent No. 1,152,536). Also suitable as polyethers are amino polyethers wherein at least a portion of the hydroxyl groups of the previously described polyethers are converted to amino groups.

The preferred starting compounds for the polyethers are those compounds which exclusively contain hydroxyl groups, while compounds containing tertiary amine groups are less preferred and compounds containing isocyanate-reactive-NH groups are much less preferred.

Among the polythioethers which should be particularly mentioned are the condensation products obtained from thiodiglycol on its own and/or with other glycols, dicarboxylic acids, formaldehyde, aminocarboxylic acids or amino alcohols. The products obtained are either polythio-mixed ethers, polythioether esters or polythioether ester amides, depending on the co-components.

Suitable polyacetals include the compounds which can be prepared from aldehydes, e.g. formaldehyde, and glycols such as diethylene glycol, triethylene glycol, ethoxylated 4,4'-dihydroxy-diphenyldimethylmethane, and hexanediol-(1,6). Polyacetals suitable for the purpose of the invention may also be prepared

by the polymerization of cyclic acetals.

Suitable polyhydroxy polyester amides and polyamines include the predominantly linear condensates obtained from polybasic saturated and unsaturated carboxylic acids or their anhydrides and polyvalent saturated or unsaturated aminoalcohols, diamines, polyamines and mixtures thereof.

Suitable monomers for producing hydroxy-functional polyacrylates include acrylic acid, methacrylic acid, crotonic acid, maleic anhydride, 2-hydroxyethyl acrylate, 2-hydroxyethyl methacrylate, 2-hydroxypropyl acrylate, 2-hydroxypropyl methacrylate, 3-hydroxypropyl acrylate, 3-hydroxypropyl methacrylate, glycidyl acrylate, glycidyl methacrylate, 2-isocyanatoethyl acrylate and 2-isocyanatoethyl methacrylate.

A low molecular weight isocyanate-reactive component having an average molecular weight of up to 400 may also be used. The low molecular weight compounds which may optionally be used in combination with the high molecular weight isocyanate-reactive compounds for the preparation of the isocyanate-terminated prepolymers include the polyhydric alcohols and polyamines which have previously been described for the preparation of the polyester polyols and polyether polyols. Dihydric alcohols are the preferred low molecular weight isocyanate-reactive component for preparing the isocyanate-terminated prepolymers.

In addition to the above-mentioned components which are preferably difunctional in the isocyanate polyaddition reaction, monofunctional and even small portions of trifunctional and higher functional components generally known in polyurethane chemistry, such as trimethylolpropane, may be used in special cases in which slight branching of the isocyanate-terminated prepolymer is desired. However, these prepolymers should be substantially linear and this may be achieved by maintaining the average functionality of the prepolymer starting components below about 2.1.

In order to enable the polyurethane-urea to be stably dispersed in an aqueous medium, ionic or potential ionic groups and, optionally, lateral or terminal, hydrophilic ethylene oxide units are chemically incorporated into the polyurethane-urea. The ionic or potential ionic groups may be either anionic or cationic, preferably anionic. Examples of anionic groups include carboxylate and sulfonate groups, while examples of cationic groups include ammonium and sulfonium groups. The ionic groups are incorporated in an amount sufficient to provide an ionic group content of 0 to 200 milliequivalents per 100 g of polyurethane-urea. When the optional ionic or potential ionic groups are incorporated, they are preferably incorporated in an amount sufficient to provide an ionic group content of at least 10, preferably at least 20 milliequivalents per 100 g of polyurethane-urea. The upper limit for the content of ionic groups is preferably 180, more preferably 100 milliequivalents per 100 g of polyurethane-urea.

The content of hydrophilic ethylene oxide units may be up to about 10%, preferably up to about 8%, more preferably about 1 to 6% and most preferably about 2 to 6%, by weight, based on the weight of the polyurethane-urea. In addition, up to about 75% of the allowable, chemically incorporated, hydrophilic ethylene oxide units may be replaced by the known nonionic, external emulsifiers such as those of the alkaryl type such as polyoxyethylene nonyl phenyl ether or polyoxyethylene octyl phenyl ether; those of the alkyl ether type such as polyoxyethylene lauryl ether or polyoxyethylene oleyl ether; those of the alkyl ester type such as polyoxyethylene laurate, polyoxyethylene oleate or polyoxyethylene stearate; and those of the polyoxyethylene benzylated phenyl ether type.

The ionic or potential ionic groups may be chemically incorporated into the isocyanate-terminated prepolymer or may be chemically incorporated through the chain extender which is used to form the polyurethane urea from the prepolymer. Suitable compounds for incorporating these groups include

i) monoisocyanates or diisocyanates which contain ionic or potential ionic groups and

ii) compounds which are monofunctional or difunctional in the isocyanate-polyaddition reaction and contain ionic or potential ionic groups.

The ionic groups are formed by neutralizing the corresponding potential ionic groups either prior to, during or after formation of the polyurethane-urea. When the potential ionic groups are neutralized prior to their incorporation into the polyurethane-urea, the ionic groups are incorporated directly. When neutralization is performed subsequent to forming the polyurethane-urea, potential ionic groups are incorporated.

Suitable compounds for incorporating the carboxylate, sulfonate and quaternary nitrogen groups are described in U.S. Patents 3,479,310, 4,108,814 and 4,303,774, the disclosures of which are herein incorporated by reference. Suitable compounds for incorporating tertiary sulfonium groups are described in U.S. Patent 3,419,533, also incorporated by reference. The preferred sulfonate groups for incorporation into the isocyanate-terminated prepolymer are the diol sulfonic acids or the diol sulfonates disclosed in U.S. Patent 4,108,814.

The neutralizing agents for converting the potential ionic groups to ionic groups are described in the preceding U.S. Patents and are also discussed hereinafter. Within the context of this invention, the term "neutralizing agents" is meant to embrace all types of agents which are useful for converting potential ionic

groups to ionic groups.

The preferred carboxylate groups for incorporation into the isocyanate-terminated prepolymer are derived from hydroxy-carboxylic acids of the general formula:

$(HO)_xQ(COOH)_y$

wherein

Q represents a straight or branched, hydrocarbon radical containing 1 to 12 carbon atoms, and

x and y represent values from 1 to 3.

Examples of these hydroxy-carboxylic acids include citric acid and tartaric acid.

The preferred acids are those of the above-mentioned formula wherein x = 2 and y = 1. These dihydroxy alkanoic acids are described in U.S. Patent 3,412,054, herein incorporated by reference. The preferred group of dihydroxy alkanoic acids are the α,α-dimethylol alkanoic acids represented by the structural formula

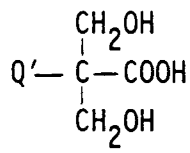

wherein Q' is hydrogen or an alkyl group containing 1 to 8 carbon atoms. The most preferred compound is α,α-dimethylolpropionic acid, i.e., when Q' is methyl in the above formula.

When incorporating the anionic or potential anionic groups through the chain extender used to convert the isocyanate-terminated prepolymer to the polyurethane-urea in the second stage of the two-stage process, it is preferred to use amino functional compounds containing anionic or potential anionic groups such as the diamino carboxylic acids or carboxylates disclosed in U.S. Patent 3,539,483 or salts of 2,6-diamino-hexanoic acid. When sulfonate groups are desired they may be incorporated through the chain extenders using salts of isethionic acid or preferably diamino sulfonates of the formula

$H_2N\text{-}A\text{-}NH\text{-}B\text{-}SO_3^{\ominus}$

wherein

A and B represent aliphatic hydrocarbon radicals containing 2 to 6 carbon atoms, preferably ethylene groups.

Whether the anionic groups are incorporated into the polyurethane-urea via the prepolymer or the chain extender is not critical. Therefore, the anionic groups may exclusively be incorporated via the prepolymer or via the chain extender or a portion of the anionic groups may be introduced according to each alternative. However, it is preferred to introduce the anionic groups via the prepolymer since this allows a wider range of process variations in preparing the polyurethane-urea dispersion.

Suitable compounds for incorporating the lateral or terminal, hydrophilic ethylene oxide units may be either monofunctional or difunctional in the context of the isocyanate-polyaddition reaction and include

i) diisocyanates which contain lateral, hydrophilic ethylene oxide units,

ii) compounds which are difunctional in the isocyanate-polyaddition reaction and contain lateral, hydrophilic ethylene oxide units,

iii) monoisocyanates which contain terminal, hydrophilic ethylene oxide units,

iv) compounds which are monofunctional in the isocyanate-polyaddition reaction and contain terminal, hydrophilic ethylene oxide units, and

v) mixtures thereof.

The preferred difunctional hydrophilic components having lateral hydrophilic chains containing ethylene oxide units include compounds corresponding to the following general formula:

(I)

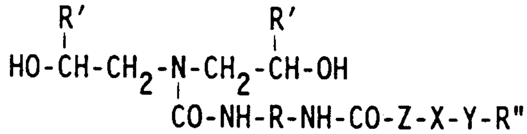

and/or compounds corresponding to the following general formula:

(II)

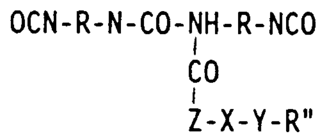

Preferred difunctional hydrophilic components are those corresponding to general formula (I) above.

In general formula (I) and (II) above,

R represents a difunctional radical of the type obtained by removing the isocyanate groups from a diisocyanate corresponding to the general formula:

$R(NCO)_2$

of the above-mentioned type;

R' represents hydrogen or a monovalent hydrocarbon radical containing from 1 to 8 carbon atoms, preferably a hydrogen atom or a methyl group;

R" represents a monovalent hydrocarbon radical having from 1 to 12 carbon atoms, preferably an unsubstituted alkyl radical having from 1 to 4 carbon atoms;

X represents the radical obtained by removal of the terminal hydroxyl group from a polyalkylene oxide chain having from about 5 to 90 chain members, preferably from about 20 to 70 chain members, of which at least about 40%, preferably at least about 65%, comprises ethylene oxide units and the remainder comprises other alkylene oxide such as propylene oxide, butylene oxide or styrene oxide units, preferably propylene oxide units;

Y represents oxygen or -NR'''- wherein R''' has the same definition as R", and

Z represents a radical which corresponds to Y, but may additionally represent -NH-.

The compounds corresponding to general formulas (I) and (II) above may be produced by the methods according to U.S. Patents 3,905,929 and 3,920,598 (the disclosures of which are herein incorporated by reference). In addition to the disclosures of these two patents, it is noted that instead of using the monofunctional polyether alcohols mentioned therein as starting materials, it is also possible to use those of the type where the polyether segment, in addition to ethylene oxide units, also contains up to 60% by weight based on polyether segment, of other alkylene oxide units such as propylene oxide, butylene oxide or styrene oxide units, preferably propylene oxide units. The presence of such "mixed polyether segments" may afford specific advantages in certain cases. These "mixed polyether segments" are described in U.S. Patent 4,190,566, the disclosure of which is herein incorporated by reference.

Other particularly preferred hydrophilic components for incorporating lateral or terminal hydrophilic chains containing ethylene oxide units include compounds corresponding to the following general formula:

H-Y'-X-Y-R"

and/or compounds corresponding to the following general formula:

OCN-R-NH-CO-Z-X-Y-R"

wherein

X, Y, Z, R and R" are as defined above; and Y' corresponds in its meaning to Y, but may additionally represent -NH-.

Monofunctional polyethers are preferably used, but preferably only in molar quantities of ≦10%, based on the polyisocyanate used, to guarantee the required high molecular weight structure of the polyurethane-urea. In cases where relatively large molar quantities of monofunctional alkylene oxide polyethers are used, it is advantageous to also use trifunctional starting compounds, although the average functionality of the polymer starting components should preferably not exceed about 2.1 in order to obtain substantially linear prepolymers.

The monofunctional hydrophilic components are produced in accordance with the processes described in U.S. Patents 3,905,929 and 3,920,598 by alkoxylating of a monofunctional starter, such as n-butanol, using ethylene oxide and optionally another alkylene oxide, for example propylene oxide. The resultant product may be optionally further modified (although this is less preferred) by reaction with excess quantities of diisocyanates or by reaction with ammonia to form the corresponding primary amino-polyethers.

The isocyanate-terminated prepolymers of the present invention are prepared by reacting the polyisocyanate component with the high molecular weight organic component containing at least 2 isocyanate-reactive groups and the following optional components, i.e. the low molecular weight organic component containing at least 2 isocyanate-reactive groups, the component containing at least one ionic group or at least one potential ionic group and the component containing the hydrophilic ethylene oxide units. The potential ionic groups are groups which may be converted to ionic groups by treatment with neutralizing agents. The ratio of isocyanate groups to isocyanate-reactive groups is maintained between about 1.1 to 5, preferably about 1.2 to 3 and most preferably about 1.3 to 2.0 on an equivalent basis. The above components may be reacted simultaneously or sequentially to produce the isocyanate-terminated prepolymer. Simultaneous reaction will lead to the production of random copolymers, whereas a sequential-type reaction will lead to the production of block copolymers. The order of addition of the compounds containing isocyanate-reactive hydrogen(s) in the sequential-type reaction process is not critical; however, during the reaction of these compounds it is especially preferred to maintain an excess of isocyanate groups in order to control the molecular weight of the prepolymer and prevent high viscosities.

The reaction temperature during prepolymer production is normally maintained below about 150°C, preferably between about 50° and 130°C. The reaction is continued until the content of unreacted isocyanate groups decreases to the theoretical amount or slightly below. The finished prepolymer should have a free isocyanate content of about 1 to 20%, preferably about 1 to 10% by weight, based on the weight of prepolymer solids. It is possible to conduct the prepolymer reaction in the presence of catalysts known to accelerate the reaction between isocyanate groups and isocyanate-reactive groups, such as organo-tin compounds, tertiary amines, etc.; however, the use of a catalyst is generally not necessary and it is often preferred to conduct the reaction without a catalyst.

The prepolymers may be prepared in the presence of solvent provided that the solvent is substantially nonreactive in the context of the isocyanate-polyaddition reaction. The solvents are generally organic and may be comprised essentially of carbon and hydrogen with or without other elements such as oxygen or nitrogen. While it may not be necessary to employ a solvent during formation of the isocyanate-terminated prepolymer, the use of a solvent may be desirable to maintain the reactants in the liquid state as well as to permit better temperature control during the reaction by serving as a heat sink and, if desired, as a refluxing medium. Solvents which may be employed include dimethylformamide, esters, ethers, ketoesters, ketones, e.g., methyl ethyl ketone and acetone, glycol-ether-esters, chlorinated hydrocarbons, aliphatic and alicyclic hydrocarbon-substituted pyrrolidinones, e.g., N-methyl-2-pyrrolidinone, hydrogenated furans, aromatic hydrocarbons and mixtures thereof.

The amount of solvent employed should be sufficient to provide a prepolymer solution having a sufficiently low viscosity to enhance the formation of the dispersion; however, the solutions may be successfully employed in forming the dispersions even though the viscosity of the solution is relatively high at the temperature of dispersion. Such viscosities may be as low as 100 centipoise or above 10,000 centipoise, e.g. as high as 50,000 centipoise, preferably 40,000 centipoise, and only mild agitation need be employed to form the dispersion, even in the absence of an external emulsifying agent. It is possible to use about 0.01 to 50 parts by weight of solvent, preferably about 0.1 to 10 parts by weight of solvent, per part by weight of the prepolymer. However, the presence of a solvent for the prepolymer is not necessary to provide a stable, aqueous dispersion. Often, when solvent is employed during the preparation of the isocyanate-terminated prepolymer, it is desirable to remove at least a portion of the solvent from the aqueous dispersion. Advantageously, the solvent to be removed from the dispersion has a lower boiling point than water and thus can be removed from the dispersion by, for example, distillation. The removal of the low boiling solvent is desirably conducted under conditions which are not deleterious to the dispersed prepolymer such as by vacuum distillation or thin film evaporation. A solvent having a higher boiling point

than water such as dimethyl formamide, N-methyl-2-pyrrolidinone, and the like may be employed, in which case, the higher boiling solvent is generally retained in the polyurethane-urea aqueous polymer dispersion to enhance the coalescense of the polyurethane-urea particles during film formation.

Suitable neutralizing or quaternizing agents for converting the potential cationic groups to cationic groups either before, during or after their incorporation into the polyurethane-ureas having previously been disclosed by reference to existing patents. In order to convert the potential anionic groups to anionic groups either before, during or after their incorporation into the polyurethane-ureas, volatile organic bases and/or nonvolatile bases are used to form the counterions of the anionic groups. Volatile organic bases are those wherein at least about 90% of the organic bases volatilize under the conditions used to cure films formed from the polyurethane-urea dispersions, preferably at least about 90% of the organic bases volatilize when films formed from the polyurethane-urea dispersions are cured under ambient conditions. Nonvolatile bases are those wherein at least about 90% of the bases do not volatilize under the conditions used to cure films formed from the polyurethane-urea dispersions, preferably at least about 90% of the bases do not volatilize when films formed from the polyurethane-urea dispersions are cured under ambient conditions. As the amount of counterions formed from volatile organic bases increases, the resistance to water swell of coatings or films prepared from the aqueous polyurethane-urea dispersions is further improved; whereas, as the amount of counterions formed from nonvolatile bases increases, the hydrolytic stability of films or coatings prepared from the aqueous polyurethane-urea dispersions is further improved. Therefore, it is possible to control the properties of the resulting coatings or films by simply controlling the ratio between the volatile organic bases and nonvolatile bases used to form the counterions of the anionic groups. U.S. Patent 4,501,852, which is herein incorporated by reference, relates to the use of mixtures of volatile organic bases and nonvolatile bases. U.S. Patent 4,701,480, which is also incorporated by reference, relates to replacing volatile organic bases with nonvolatile bases.

Suitable volatile organic bases for neutralizing the potential anionic groups are the primary, secondary or tertiary amines. Of these the trialkyl-substituted tertiary amines are preferred. Examples of these amines include trimethyl amine, triethyl amine, triisopropyl amine, tributyl amine, N,N-dimethyl-cyclohexyl amine, N,N-dimethylstearyl amine, N,N-dimethyl-aniline, N-methylmorpholine, N-ethylmorpholine, N-methylpiperazine, N-methylpyrrolidine, N-methyl-piperidine, N,N-dimethyl-ethanol amine, N,N-diethyl-ethanol amine, triethanol amine, N-methyl-diethanol amine, dimethyl-aminopropanol, 2-methoxyethyldimethyl amine, N-hydroxyethylpiperazine, 2-(2-dimethylaminoethoxy)-ethanol and 5-diethylamino-2-pentanone. The most preferred tertiary amines are those which do not contain active hydrogen(s) as determined by the Zerewitinoff test since they are capable of reacting with the isocyanate groups of the prepolymers which can cause gelation, the formation of insoluble particles or chain termination.

The more volatile tertiary amines are especially advantageous since they do not take part in the isocyanate-polyaddition reaction and they may also be more easily removed from the finished dispersion by distillation. When isocyanate-terminated prepolymers containing potential anionic groups are formed, it would be difficult to neutralize these groups prior to dispersion in water with primary or secondary amines due to the fact that these amines may react with the free isocyanate groups of the prepolymer. In this context, these amines act more like chain terminators or chain extenders than neutralizing agents, and make the subsequent high molecular weight build-up during the aqueous chain extension step more difficult and less predictable. Thus, if primary and secondary amines are used, they should preferably be used as neutralizing agents prior to the formation of the prepolymer, i.e. when the potential anionic groups are converted to anionic groups prior to their incorporation into the prepolymer. However, the tertiary amines are preferred even when neutralization is conducted in this manner.

Suitable nonvolatile bases include monovalent metals, preferably alkali metals, more preferably lithium, sodium and potassium and most preferably sodium. The nonvolatile bases may be used in the form of inorganic or organic salts, preferably salts wherein the anions do not remain in the dispersions such as hydrides, hydroxides, carbonates or bicarbonates.

When the potential ionic groups of the prepolymer are neutralized, they provide hydrophilicity to the prepolymer and better enable it to be stably dispersed in water. The potential or unneutralized anionic groups do not provide this degree of hydrophilicity. Accordingly, a sufficient amount of the potential ionic groups must be neutralized so that when combined with the hydrophilic ethylene oxide units, the polyurethane-urea final product will be a stable dispersion. Generally, at least about 75%, preferably at least about 90%, of the potential ionic groups are neutralized to the corresponding ionic groups. Larger amounts of potential ionic groups may remain unneutralized; however, there are no advantages to be gained from large quantities of unneutralized potential ionic groups and their presence could be detrimental by minimizing the hydrolytic stability of the resulting films or coatings. When smaller amounts of potential ionic groups are incorporated, it may be necessary to neutralize substantially all of these groups to obtain the

desired amount of hydrophilicity. No firm guidelines can be given as to the amount of ionic groups needed, since the dispersibility of the polyurethane-urea depends on many factors including, but not limited to, the amount of hydrophilicity provided by the ethylene oxide units, the desired particle size and the application requirements.

The conversion of the potential ionic groups to ionic groups may be conducted

1) prior to prepolymer formation by treating the component containing the potential ionic group(s)

2) after prepolymer formation, but prior to dispersing the prepolymer or

3) in some cases, by adding the neutralizing agent to all or a portion of the dispersing water.

The second option is preferred. The reaction between the neutralizing agents and the ionic groups may be conducted between about 20°C and 150°C, but is normally conducted at temperatures below about 100°C, preferably between about 30 and 80°C and most preferably between about 50 and 70°C, with agitation of the reaction mixture.

The isocyanate-terminated prepolymers may be converted into aqueous polyurethane-urea dispersions in accordance with the methods known in polyurethane chemistry and described, e.g., in "Waterborne Polyurethanes," Rosthauser et al, Advances in Urethane Science and Technology, Vol. 10, pg. 121-162 (1987). It is also possible in accordance with the present invention to mix dispersions prepared by the different methods set forth hereinafter. In addition, it is possible to prepare one dispersion neutralized with volatile organic bases and a second dispersion, prepared by the same or a different process, neutralized with nonvolatile bases which may subsequently be mixed either before or after the process according to the present invention is conducted.

According to one process for preparing the polyurethane-urea dispersions, the isocyanate-terminated prepolymer is prepared in the melt and subsequently dissolved in a suitable solvent and chain extended to form a polyurethane-urea. It is also possible in accordance with this process to form the polyurethane-urea by the one-shot process wherein the prepolymer-forming reactants and chain extender are all reacted in one step rather than by initially forming a prepolymer. The solution of the polyurethane-urea is then mixed with water and the solvent is removed by distillation to produce the aqueous polyurethane-urea dispersion. This process is disclosed in U.S. Patent 3,479,310, herein incorporated by reference, and may be conducted with any of the polyisocyanates set forth as suitable for the preparation of the isocyanate-terminated prepolymers including the aromatic diisocyanates. However, the process is limited to the production of substantially linear polyurethane-ureas since cross-linked polyurethane-ureas may gel when prepared in the organic phase.

Polyurethane-urea dispersions may also be prepared in accordance with U.S. Patent 3,756,992 by converting the terminal isocyanate groups of a hydrophilic prepolymer to acylated amino groups by reaction with urea, ammonia or other suitable compounds. The acylated amino end groups are then converted to methylol end groups by reaction with formaldehyde or related compounds either before, during, or after the addition of water. The methylol end groups are then linked through methylene bridges by heating the dispersions. This process may be conducted with any of the polyisocyanates set forth as suitable for the preparation of isocyanate-terminated prepolymers including the aromatic diisocyanates.

An additional method of forming the aqueous polyurethane-urea dispersions is by conducting the chain extension of the isocyanate-terminated prepolymers in an aqueous medium. In one embodiment hydrophilic, isocyanate-terminated prepolymers are mixed with at least partially blocked, diamine or hydrazine chain extenders in the absence of water and the mixture is then mixed with water which releases the blocking agent to allow chain extension of the prepolymers. Processes of this type are disclosed in U.S. Patents 4,269,748, 4,192,937, 4,292,226 and 4,829,122. Aromatic diisocyanates may also be used to prepare the isocyanate-terminated prepolymers to be used according to these processes; however, prepolymers containing aliphatically- and/or cycloaliphatically-bound terminal isocyanate groups are preferred.

The preferred method of conducting the chain extension of the isocyanate-terminated prepolymer in an aqueous medium is by dispersing the prepolymer in water and subsequently adding the chain extender. To form the dispersion either water is added to the prepolymer or preferably the prepolymer is added to water. Prepolymers containing aliphatically- and/or cycloaliphatically bound terminal isocyanate groups are especially preferred when chain extension is conducted in the presence of an aqueous medium. If it is desired to chain extend prepolymers containing aromatically-bound, terminal isocyanate groups by this method, then it is preferable to block the isocyanate groups prior to contact with water as disclosed in U.S. Patent 4,387,181.

It is also possible to prepare cross-linked dispersions in accordance with this process by using chain extenders having an average functionality greater than 2 in accordance with U.S. Patents 4,408,008 or 4,203,883. If the prepolymer is dispersed by adding water to the prepolymer with agitation, the viscosity of

the mixture increases significantly, since initially the organic phase is continuous. As the addition of water is continued, a point is reached where a phase change occurs and the aqueous phase becomes continuous and the viscosity decreases. The remaining portion of the water is then added. If the neutralizing agent is in the dispersing water, then it is important that sufficient ionic groups be present to produce a stable dispersion at the point of phase change when combined with the hydrophilic effect of the ethylene oxide units. This problem may be obviated by adding all of the neutralizing agent with a portion of the dispersing water which is insufficient to cause the phase change, followed by the addition of the remaining water. This problem may also be overcome by incorporating excess hydrophilic ethylene oxide units and/or potential ionic groups into the prepolymer, or by using an excess of the volatile neutralizing agent. However, these latter methods are less preferred since they may minimize the improvements in hydrolytic stability which are obtained in accordance with the present invention.

When the prepolymer is added to the water, significant increases in viscosity do not occur. In addition, if alternative 3 is used for neutralization, all of the neutralization agent is present in the water prior to the addition of the prepolymer. In addition, the problems discussed in the preceding paragraph are not encountered when the initial neutralizing agent is present in the dispersing water since all of the water is initially present.

The prepolymer is usually added in increments to the water or water-neutralizing agent mixture. The aqueous mixture is preferably agitated during the addition of the prepolymer to assist in forming the dispersion. Any low boiling solvent present during prepolymer formation may be removed prior to dispersing the prepolymer; however, it is preferred to remove the solvent after the dispersion is formed since the solvent, especially water miscible solvents, will facilitate the formation of the dispersion and, also, the subsequent reaction with the amine chain extenders. The presence of solvent is especially preferred when the dispersion is formed by adding water to the prepolymer since it helps to reduce the viscosity peak normally encountered with this process.

After the formation of the dispersed, isocyanate-terminated prepolymer the amine chain extenders should be added before the reaction of the terminal isocyanate groups with water proceeds to any significant extent, normally within about 30 minutes, preferably within about 15 minutes depending upon the temperature.

The aqueous polyurethane-urea dispersions of the present invention are formed by reacting the isocyanate-terminated prepolymers with a polyamine or a mixture of polyamines in accordance with the previously described processes. The average functionality of the amine, i.e., the number of amine nitrogens per molecule, should be between about 2 and 6, preferably between about 2 and 4 and most preferably between about 2 and 3. The desired functionalities can be obtained by using mixtures of polyamines. For example, a functionality of 2.5 can be achieved by using equimolar mixtures of diamines and triamines. A functionality of 3.0 can be achieved either by using

1) triamines,
2) equimolar mixtures of diamines and tetramines,
3) mixtures of 1 and 2, or
4) any other suitable mixtures.

These other suitable mixtures for obtaining the desired functionalities will be readily apparent to those of ordinary skill in the art.

Suitable amines are essentially hydrocarbon polyamines containing 2 to 6 amine groups which have isocyanate-reactive hydrogens according to the Zerewitinoff test, e.g., primary or secondary amine groups. The polyamines are generally aromatic, aliphatic or alicyclic amines and contain between about 1 to 30 carbon atoms, preferably about 2 to 15 carbon atoms, and most preferably about 2 to 10 carbon atoms. These polyamines may contain additional substituents provided that they are not as reactive with isocyanate groups as the primary or secondary amines. Examples of polyamines for use in the present invention include the amines listed as low molecular compounds containing at least two isocyanate-reactive amino hydrogens, and also diethylene triamine, triethylene tetramine, tetraethylene pentamine, pentaethylene hexamine, N,N,N-tris-(2-aminoethyl)-amine, N-(2-piperazinoethyl)-ethylene diamine, N,N'-bis-(2-aminoethyl)-piperazine, N,N,N'-tris-(2-aminoethyl)-ethylene diamine, N-[N-(2-amino-ethyl)-2-aminoethyl]-N'-(2-aminoethyl)-piperazine, N-(2-aminoethyl)-N'-(2-piperazino-ethyl)-ethylene diamine, N,N-bis-(2-aminoethyl)-N-(2-piperazinoethyl)-amine, N,N-bis-(2-piperazinoethyl)-amine, polyethylene imines, iminobispropylamine, guanidine, melamine, N-(2-aminoethyl)-1,3-propane diamine, 3,3'-diamino-benzidine, 2,4,6-triamino-pyrimidine, polyoxypropylene amines, tetrapropylenepentamine, tripropylenetetramine, N,N-bis-(6-aminohexyl)amine, N,N'-bis-(3-aminopropyl)-ethylene diamine and 2,4-bis-(4'-aminobenzyl)-aniline.

Preferred polyamines are 1-amino-3-aminomethyl-3,5,5-trimethyl-cyclohexane (isophorone diamine or IPDA), bis-(4-aminocyclohexyl)-methane, bis-(4-amino-3-methylcyclohexyl)-methane, 1,6-diaminohexane,

ethylene diamine, diethylene triamine, triethylene tetramine, tetraethylene pentamine and pentaethylene hexamine.

The amount of polyamine chain extender to be used in accordance with the present invention is dependent upon the number of terminal isocyanate groups in the prepolymer. Generally, the ratio of terminal isocyanate groups of the prepolymer to the amino hydrogens of the polyfunctional amine is between about 1.0:0.6 and 1.0:1.1, preferably between about 1.0:0.8 and 1.0:0.98 on an equivalent basis. Lesser amounts of the polyamine will allow for too much undesired reaction of the isocyanate groups with water, while an undue excess may lead to products with undesirably low molecular weights. For the purposes of these ratios a primary amino group is considered to have one amino hydrogen. For example, ethylene diamine has two equivalents of amino hydrogens, while diethylene triamine has three equivalents.

The reaction between the isocyanate-terminated prepolymer and the polyamine is generally conducted at temperatures from about 5 to 90 °C, preferably from about 20 to 80 °C, and most preferably from about 30 to 60 °C. The reaction conditions are normally maintained until the isocyanate groups are essentially completely reacted. In order to reduce the presence of localized concentrations gradients when conducting the chain extension in an aqueous medium, the polyamine is preferably added in increments to the dispersed prepolymer which is normally agitated to ensure complete mixing of the polyamine throughout the aqueous medium. The polyamine may be added to the aqueous medium in its pure form or it may be dissolved or dispersed in water or an organic solvent. Suitable organic solvents are those previously described for use in preparing the isocyanate-terminated prepolymer.

The final product is a stable, aqueous dispersion of polyurethane-urea particles having a solids content of up to about 60% by weight, preferably about 15-60% by weight and most preferably about 30-45% by weight. However, it is always possible to dilute the dispersions to any minimum solids content desired. The particle size is generally below about 1.0 micron, and preferably between about 0.001 to 0.5 microns. The average particle size should be less than about 0.5 micron, and preferably between 0.01 to 0.3 microns. The small particle size enhances the stability of the dispersed particles and also leads to the production of films with high surface gloss.

Even if the polyurethane-urea dispersions of the subject application contain ionic groups they are largely unaffected by electrolytes if they also contain hydrophilic, ethylene oxide units. This provides, for example, for the acid-catalyzed crosslinking of the latex particles with formaldehyde or formaldehyde derivatives; similarly they may be pigmented with electrolyte-active pigments or dyes. Another property of the dispersions according to the present invention is that they may be coagulated which makes them suitable for processing into films permeable to water vapor simply by heating.

The dispersions may be blended with other dispersions, for example, with polyvinyl acetate, epoxy resins, polyethylene, polystyrene, polybutadiene, polyvinyl chloride, polyacrylate and copolymer plastics dispersions. The addition of known, chemically nonfixed, ionic emulsifiers is also possible but not preferred. Fillers, plasticizers, pigments, carbon black, silica sols and the known levelling agents, wetting agents, antifoaming agents, stabilizers, etc. may also be incorporated into the dispersions.

The dispersions of the polyurethane-ureas in water are generally stable, storable and transportable, and may be processed at a later stage, for example, by foaming. In general, they dry directly into dimensionally stable coatings, although formation of the end products may also be carried out in the presence of known cross-linking agents. Polyurethane-ureas having different properties may be obtained according to the chemical composition selected and to the urethane group content. Thus, it is possible to obtain soft, tacky compositions, and thermoplastic and elastomeric products having a variety of different hardnesses up to glass-hard duroplasts. The hydrophilicity of the products may also vary within certain limits. The elastomeric products may be thermoplastically processed at elevated temperatures, for example, at from about 100° to 180 °C, providing they are not highly crosslinked.

The aqueous polyurethane-urea dispersions are suitable for coating and impregnating woven and nonwoven textiles, leather, paper, wood, metals, ceramics, stone, concrete, bitumen, hard fibers, straw, glass, porcelain, plastics of a variety of different types, glass fibers for antistatic and crease-resistant finishing; as binders for nonwovens, adhesives, adhesion promoters, laminating agents, hydrophobizing agents, plasticizers; as binders, for example, for cork powder or sawdust, glass fibers, asbestos, paper-like materials, plastics or rubber waste, ceramic materials; as auxiliaries in textile printing and in the paper industry; as additives to polymers as sizing agents, for example, for glass fibers; and for finishing leather.

The dispersions may also be applied to a porous substrate which subsequently remains bonded to the end product, such as woven or nonwoven textile structures and fiber mats, felts or nonwovens, also paper webs, foam sheeting or split leather which by virtue of their absorbing action cause the coating to harden immediately. This is followed by drying and, optionally, pressing at elevated temperatures. However, drying may also be carried out on smooth, porous or nonporous materials, for example, metal, glass, paper,

cardboard, ceramic materials, sheet steel, silicone rubber, aluminum foil, the end sheet structure subsequently being lifted off and used as such, or applied to a substrate using the reversal process by bonding, flame lamination or calendering. Application by the reversal process may be carried out at any time.

The properties of the end products may be modified by using vinyl polymers or active and inactive fillers. It is also possible to use, for example, polyethylene, polypropylene, polyvinyl acetate, ethylene/vinyl acetate copolymers which may optionally be (partially) hydrolyzed and/or grafted with vinyl chloride, styrene-butadiene copolymers, ethylene (graft) copolymers, polyacrylates, carbon black, silica, asbestos, talcum, kaolin, titanium dioxide and glass in the form of powder or in the form of fibers or cellulose. Depending upon the required property spectrum and the application envisaged for the final product, up to about 70%, based on total dry substance, of these fillers may be present in the final product. Dyes or additives which influence flow properties may, of course, also be added.

Drying of the product obtained by various application techniques may be carried out either at room temperature or at elevated temperature. The drying temperature to be selected in each individual case, which is governed not only by the chemical compositions of the material, but above all by its moisture content, the drying time and the layer thickness, is readily determined by a preliminary test. For a given heating time, the drying temperature must always be below the solidification temperature.

Extremely hard polyurethane-ureas obtained from finely divided dispersions and sols are suitable for use as stoving lacquers and, in some cases, even as air-drying lacquers. They combine extreme hardness and elasticity with high gloss, favorable light stability and weather resistance.

These polyurethane dispersions are specifically suited for coatings on vinyl fabrics used in automotive seating and commercial upholstery. In these application areas, properties like plasticizer barrier effect, improved abrasion resistance and good hydrolytic and UV-resistance are of importance. They are also useful as coatings for textiles such as tarpaulins, specifically for military application where properties like excellent toughness and retained properties after aging are essential.

Business machine housings which are made from plastic materials and where solvent borne coatings can attack the surface are another important application for these aqueous polyurethane-urea dispersions. Additionally, they are excellently suited to coat bowling alleys, as chip resistant coatings in automotive applications, for furniture, aircraft, foil and paper. They are also valuable as a co-binder for acrylic dispersions to improve properties like alcohol resistance, flexibility and appearance of resulting coatings.

In the following examples all parts and percentages are by weight unless otherwise specified.

## EXAMPLES

Example 1 - According to the invention

An isocyanate-terminated prepolymer was prepared from the following charge:

| Grams | Charge |
|---|---|
| 298.9 | 1,6-hexanediol, neopentyl glycol adipate avg. MW -1700, molar ratio of glycols 65:35 |
| 20.4 | Dimethylol propionic acid (DMPA) |
| 11.4 | * monofunctional ethylene oxide ether, avg. MW - 2145 |
| 191.2 | N-methyl-2-pyrrolidinone |
| 112.3 | Bis-(4-isocyanatocyclohexyl)-methane, ≈ 100% trans,trans (t,t) isomer |
| 13.8 | Triethylamine (TEA) |

* A polyether monohydric alcohol prepared from n-butanol, ethylene oxide, and propylene oxide (in a molar ratio ethylene oxide to propylene oxide of 83:17).

The bis-(4-isocyanatocyclohexyl)-methane and NMP were charged into a 1-liter 3-neck flask equipped with a thermocouple, condenser with drying tube, and a stirrer with a 2 3/4 inch blade. While stirring, the mixture was heated to 50 °C to dissolve the isocyanate. The 1,6-hexanediol, neopentyl glycol adipate, DMPA and monofunctional ethylene oxide ether were then charged. The components were stirred and heated to 105 °C until an isocyanate content of 1.35% (theoretical NCO - 1.30%) was reached. The mixture was cooled to approximately 70 °C and the viscosity of the prepolymer was measured. The actual viscosity was 1800 mPas at 67 °C. Heat was added to maintain the temperature at 70 °C. The TEA was added and the mixture was allowed to stir for 5 minutes.

While stirring rapidly, 575 grams of the neutralized prepolymer (70 °C) was slowly dispersed in 556.1 grams of demineralized water (DMW) at 50 °C in a 2-liter resin flask equipped with turbine type stirring blades.

An amine solution made up of 3.33 grams of ethylene diamine, 0.92 grams of hydrazine hydrate and 24.08 grams of DMW was added slowly to the dispersion. The resulting aqueous polyurethane dispersion was heated to 70 °C for 4 hours to allow any remaining free isocyanate to react. The resulting product was a stable, fine particle size, polyurethane-urea dispersion with an ionic group content of 1.34% and an ethylene oxide content of 2.56%, based on the weight of the polyurethane-urea.

Product Data:

Total solids - 34.6%
pH - 7.8
Viscosity - 90 mPas at 23 °C

Comparative Example 1

An isocyanate-terminated prepolymer was prepared from the following charge:

| Grams | Charge |
|---|---|
| 297.5 | 1,6-hexanediol, neopentyl glycol adipate (Example 1) |
| 20.4 | Dimethylol propionic acid (DMPA) |
| 11.4 | monofunctional ethylene oxide ether, avg. MW - 2145 |
| 191.2 | N-methyl-2-pyrrolidinone (NMP) |
| 112.3 | Bis-(4-isocyanatocyclohexyl)-methane, ≈ 20% t,t isomer |
| 12.3 | Triethylamine (TEA) |

The bis-(4-isocyanatocyclohexyl)-methane and NMP were charged into a 1-liter 3-neck flask equipped with a thermocouple, condenser with drying tube and a stirrer with a 2 3/4 inch blade. While stirring, the mixture was heated to 50 °C. The 1,6-hexanediol, neopentyl glycol adipate, DMPA and monofunctional ethylene oxide ether were then charged. The components were stirred and heated to 105 °C until an isocyanate content of 1.26% (theoretical NCO - 1.31%) was reached. The mixture was cooled to approximately 70 °C and the viscosity of the prepolymer was measured. The actual viscosity was 2800 mPas at 66 °C. Heat was added to maintain the temperature at 70 °C. The TEA was added and the mixture was stirred for 5 minutes.

While stirring rapidly, 550 grams of the neutralized prepolymer (70 °C) was slowly dispersed in 532.1 grams of demineralized water (DMW) at 50 °C in a 2-liter resin flask equipped with turbine type stirring blades.

An amine solution made up of 2.97 grams of ethylene diamine, 0.82 grams of hydrazine hydrate and 21.48 grams of DMW was added slowly to the dispersion.

The resulting aqueous polyurethane dispersion was heated to 70 °C for 4 hours to allow any remaining free isocyanate to react. The resulting product was a stable, fine particle size, polyurethane-urea dispersion with an ionic group content of 1.2% and an ethylene oxide content of 2.0%, based on the weight of the polyurethane-urea.

Product Data:

Total solids - 34.6%
pH - 7.5
Viscosity - 190 mPas at 23 °C

Example 2 - According to the invention

An isocyanate-terminated prepolymer was prepared, as described in Example 1, from the following charge:

| Grams | Charge |
|---|---|
| 246.2 | 1,6-hexanediol, neopentyl glycol adipate (Example 1) |
| 4.3 | 1,4-butanediol (XB) |
| 22.3 | Dimethylol propionic acid (DMPA) |
| 11.2 | monofunctional ethylene oxide ether, avg. MW - 2145 |
| 248.5 | N-methyl-2-pyrrolidinone (NMP) |
| 142.4 | Bis-(4-isocyanatocyclohexyl)-methane ≈ 100% t,t isomer |
| 13.4 | Triethylamine (TEA) |

The isocyanate content of the prepolymer was 2.26% (theoretical NCO - 2.27%). The viscosity at 67 °C was 800 mPas.

600 grams of the neutralized prepolymer was dispersed, as in Example 1, into 454.6 grams of DMW (50 °C). An amine solution made up of 5.86 grams of ethylene diamine, 1.63 grams of hydrazine hydrate and 42.44 grams of DMW was slowly added to the dispersion. The final dispersion was then heated to 70 °C for 4 hours to allow any free isocyanate to react.

The resulting product was a stable, fine particle size, polyurethane-urea dispersion with an ionic group content of 1.35% and an ethylene oxide content of 2.0%, based on the weight of the polyurethane-urea.

Product Data:

Total solids - 34.8%
pH - 7.9
Viscosity - 220 mPas at 23 °C

Comparative Example 2

An isocyanate-terminated prepolymer was prepared, as described in Comparative Example 1, from the following charge:

| Grams | Charge |
|---|---|
| 246.2 | 1,6-hexanediol, neopentyl glycol adipate (Example 1) |
| 4.3 | 1,4-butanediol (XB) |
| 22.3 | Dimethylol propionic acid (DMPA) |
| 11.2 | monofunctional ethylene oxide ether, avg. MW - 2145 |
| 248.5 | N-methyl-2-pyrrolidinone (NMP) |
| 142.4 | Bis-(4-isocyanatocyclohexyl)-methane, ≈ 20% t,t isomer |
| 13.4 | Triethylamine (TEA) |

The isocyanate content of the prepolymer was 2.06% (theoretical NCO - 2.25%). The viscosity at 66 °C was 600 mPas.

600 grams of the neutralized prepolymer was dispersed, as in Comparative Example 1, into 457.2 grams of DMW (50 °C). An amine solution made up of 5.30 grams of ethylene diamine, 1.47 grams of hydrazine hydrate and 38.36 grams of DMW was slowly added to the dispersion. The final dispersion was then heated to 70 °C for 4 hours to allow any free isocyanate to react.

The resulting product was a stable, fine particle size, polyurethane-urea dispersion with an ionic group content of 1.35% and an ethylene oxide content of 2.0%, based on the weight of the polyurethane-urea.

Product Data:

Total solids - 34.5%
pH - 7.2
Viscosity - 110 mPas at 23 °C

Example 3 - According to the invention

An isocyanate-terminated prepolymer was prepared, as described in Example 1, from the following charge:

| Grams | Charge |
|---|---|
| 441.9 | 1,6-hexanediol, neopentyl glycol adipate (Example 1) |
| 17.7 | Neopentyl glycol (NPG) |
| 42.4 | Dimethylol propionic acid (DMPA) |
| 471.7 | N-methyl-2-pyrrolidinone (NMP) |
| 293.4 | Bis-(4-isocyanatocyclohexyl)-methane, ≈ 100% t,t isomer |
| 25.6 | Triethylamine (TEA) |

The isocyanate content of prepolymer was 2.32% (theoretical NCO - 2.47%). The viscosity at 66 °C was 1200 mPas.

600 grams of the neutralized prepolymer was dispersed, as in Example 1, into 447.2 grams of DMW (50 °C). An amine solution made up of 5.96 grams of ethylene diamine, 1.66 grams of hydrazine hydrate and 43.18 grams of DMW was slowly added to the dispersion. The final dispersion was then heated to 70 °C for 4 hours to allow any free isocyanate to react.

The resulting product was a stable, fine particle size, polyurethane-urea dispersion with an ionic group content of 1.37%, based on the weight of the polyurethane-urea.

Product Data:

Total solids - 35.5%
pH - 7.7
Viscosity - 120 mPas at 23 °C

Comparative Example 3

An isocyanate-terminated prepolymer was prepared, as described in Comparative Example 1, from the following charge:

| Grams | Charge |
|---|---|
| 226.7 | 1,6-hexanediol, neopentyl glycol adipate (Example 1) |
| 9.1 | Neopentyl glycol (NPG) |
| 21.8 | Dimethylol propionic acid (DMPA) |
| 242.0 | N-methyl-2-pyrrolidinone |
| 150.5 | Bis-(4-isocyanatocyclohexyl)-methane, ≈ 20% t,t isomer |
| 13.1 | Triethylamine (TEA) |

The isocyanate content of the prepolymer was 2.42% (theoretical NCO - 2.46%). The viscosity at 70 °C was 500 mPas.

575 grams of the above neutralized prepolymer was dispersed, as in Comparative Example 1, into 427.3 grams of DMW (50 °C). An amine solution made up of 5.96 grams of ethylene diamine, 1.66 grams of hydrazine hydrate and 43.18 grams of DMW was slowly added to the dispersion. The final dispersion was then heated to 70 °C for 4 hours to allow any free isocyanate to react.

The resulting product was a stable, fine particle size, polyurethane-urea dispersion with an ionic group content of 1.37%, based on the weight of the polyurethane-urea.

Product Data:

Total solids - 34.4%
pH - 7.3
Viscosity - 70 mPas at 23 °C

Example 4A - According to the invention

An isocyanate-terminated prepolymer was prepared from the following charge:

| Grams | Charge |
|---|---|
| 294.0 | 1,6-hexanediol adipate, avg. MW - 840 |
| 23.5 | Dimethylol propionic acid (DMPA) |
| 145.4 | N-methyl-2-pyrrolidinone (NMP) |
| 179.3 | Bis-(4-isocyanatocyclohexyl)-methane, 51.5% t,t isomer |
| 16.8 | Triethylamine (TEA) |

The 1,6-hexanediol adipate, DMPA, NMP and bis-(4-isocyanato-cyclohexyl)-methane were charged into a 1-liter 3-neck flask equipped with a thermometer, condenser with drying tube and a stirrer with a 2 3/4 inch blade. The components were stirred and heated to 110°C until an isocyanate content of 1.91% (theoretical NCO - 2.06%) was reached. An additional 100 grams of NMP was charged followed by addition of the TEA; the mixture was then stirred for 5 minutes.

While stirring rapidly, the neutralized prepolymer was slowly dispersed in 767.3 grams of demineralized water (DMW) at 50°C in a 2-liter resin flask equipped with turbine type stirring blades.

An amine solution made up of 8.10 grams of diethylene triamine and 100.0 grams of DMW was added slowly to the dispersion. The resulting aqueous polyurethane dispersion was heated to 70°C for 4 hours to allow any remaining free isocyanate to react.

The resulting product was a stable, fine particle size, polyurethane-urea dispersion with an ionic group content of 1.45%, based on the weight of the polyurethane-urea.

Product Data:

Total solids - 34.5%
pH - 8.01
Viscosity - 260 mPas at room temperature

Example 4B - According to the invention

An isocyanate-terminated prepolymer was prepared, as described in Example 4A, from the following charge:

| Grams | Charge |
|---|---|
| 294.0 | 1,6-hexanediol adipate avg. MW - 840 |
| 23.5 | Dimethylol propionic acid (DMPA) |
| 145.4 | N-methyl-2-pyrrolidinone (NMP) |
| 179.3 | Bis-(4-isocyanatocyclohexyl)-methane, 78.2% t,t isomer |
| 16.8 | Triethylamine (TEA) |

The isocyanate content of the above prepolymer was 1.72% (theoretical NCO - 2.01%). An additional 100 grams of NMP was charged and the mixture cooled to 70°C. The TEA was then added and stirred for 5 minutes.

690 grams of the above neutralized prepolymer (70°C) was dispersed, as in Example 4A, into 880.3 grams of DMW (50°C). An amine solution made up of 6.66 grams of diethylene triamine and 100.0 grams of DMW was slowly added to the dispersion. The final dispersion was then heated to 70°C for 4 hours to allow any free isocyanate to react.

The resulting product was a stable, fine particle size, polyurethane-urea dispersion with an ionic group content of 1.45%, based on the weight of the polyurethane-urea.

Product Data:

Total solids (calc.) - 27.3%
pH - 7.98
Viscosity - 374 mPas at room temperature

Comparative Example 4

An isocyanate-terminated prepolymer was prepared, as described in Example 4A, from the following charge:

| Grams | Charge |
|---|---|
| 294.0 | 1,6-hexanediol adipate, avg. MW - 840 |
| 23.5 | Dimethylol propionic acid (DMPA) |
| 145.4 | N-methyl-2-pyrrolidinone (NMP) |
| 179.3 | Bis-(4-isocyanatocyclohexyl)-methane, ≈ 20% t,t isomer |
| 16.8 | Triethylamine (TEA) |

The isocyanate content of the above prepolymer was 1.59% (theoretical NCO - 2.07%). An additional 100 grams of NMP was charged and the mixture cooled to 70 °C. The TEA was then added and stirred for 5 minutes.

While stirring rapidly, the neutralized prepolymer (70 °C) was slowly dispersed in 767.3 grams of demineralized water (DMW) at 50 °C in a 2-liter resin flask equipped with turbine type stirring blades.

An amine solution made up of 7.50 grams of diethylene triamine and 100.0 grams of DMW was slowly added to the dispersion. The final dispersion was then heated to 70 °C for 4 hours to allow any free isocyanate to react.

The resulting product was a stable, fine particle size, polyurethane-urea dispersion with an ionic group content of 1.41%, based on the weight of the polyurethane-urea.

Product Data:

Total solids - 31.3%
pH - 8.12
Viscosity - 324 mPas at 25.5 °C

The following table sets forth the physical and mechanical properties of the polyurethane-urea dispersions described in Examples 1-4B and Comparative Examples (CE) 1-4. The films were prepared as a 15 mil wet film and heat cured at 50 °C for 15 minutes and then at 120 °C for 30 minutes.

| EXAMPLE | 1 | CE 1 | 2 | CE 2 | 3 | CE 3 | 4A | 4B | CE 4 |
|---|---|---|---|---|---|---|---|---|---|
| % t,t r-MDI | 100 | 20 | 100 | 20 | 100 | 20 | 51.5 | 78.2 | 20 |
| % HARD SEGMENT | 30 | | 40 | | 45 | | | 42 | |
| POLYOL MW | 1700 | | 1700 | | 1700 | | | 840 | |
| CHAIN EXTENDER | -- | | XB | | NPG | | | | |
| ELONGATION | 368 | 710 | 417 | 460 | 323 | 390 | 270 | 285 | 250 |
| TENSILE | 1072 | 1142 | 3867 | 3614 | 5321 | 4924 | 4300 | 4775 | 3900 |
| YIELD STRESS | 465 | 182 | 1055 | 737 | 1661 | 1522 | 1800 | 1925 | 1500 |
| MODULUS at 100% | 840 | 331 | 1538 | 1052 | 2166 | 1845 | 2850 | 3000 | 2700 |
| 200% | 957 | 366 | 1978 | 1438 | 3192 | 2516 | -- | -- | -- |
| 300% | 987 | 441 | 2725 | 2035 | 4770 | 3659 | -- | -- | -- |
| 400% | -- | 551 | 3736 | 2912 | -- | 4900 | -- | -- | -- |
| 500% | -- | 696 | -- | -- | -- | -- | -- | -- | -- |
| 600% | -- | 882 | -- | -- | -- | -- | -- | -- | -- |
| MEK DOUBLE RUB[1] | 162 | 30 | >500 | 200 | >500 | 250 | -- | -- | -- |
| PENCIL HARDNESS[2] | HB | HB | HB | HB | 4H | 4H | -- | -- | -- |
| PENDULUM HARDNESS (SEC.)[3] | 31 | 11 | 45 | 33 | 58 | 51 | 34 | 43 | 26 |
| SOFTENING PT.(°C)[4] | 80 | 30 | 155 | 70 | 165 | 75 | -- | -- | -- |
| TABER ABRASION RESISTANCE[5] | Fail | --[6] | Pass | Fail | Pass | Fail | -- | -- | -- |

1 Value represents number of double rubs to remove the film from the substrate using a cotton ball soaked in methyl ethyl ketone

2 Scale for Pencil Hardness with increasing hardness.

6B 4B 2B HB 2H 4H 6H 8H

ASTM-3363 Micrometrics Pencil Hardness Gauge

3 ASTM D-4366, Method A, Konig Pendulum Hardness

4 Softening point determined using Perkin Elmer TMA7. The softening point determination was interpreted by drawing a tangent to the slope of the plot.

5 ASTM D-4060-84.

Fail (complete penetration to the substrate during the test).

Pass (did not penetrate to the substrate during the test).

6 The film from Comparative Example 1 was too soft to accurately determine abrasion resistance and was much softer than the film from Example 1.

The following tables set forth the solvent resistance of the polyurethane-urea dispersions described in Examples 1-3 and Comparative Examples (CE) 1-3.

Isopropanol Resistance of Aqueous Polyurethane Dispersion Films

| EXAMPLE | 1 | CE 1 | 2 | CE 2 | 3 | CE 3 |
|---|---|---|---|---|---|---|
| %t,t-rMDI | 100 | 20 | 100 | 20 | 100 | 20 |
| % HARD SEGMENT | 30 | | 40 | | 45 | |
| POLYOL MW | 1700 | | 1700 | | 1700 | |
| CHAIN EXTENDER | -- | | XB | | NPG | |
| % VOLUME SWELL[7] | | | | | | |
| 1 DAY | 12.5% | C | 6.2% | C | 6.2% | C |
| 3 DAYS | 12.5% | C | 12.5% | C | 6.2% | C |
| 5 DAYS | 12.5% | D | 12.5% | C | 6.2% | C |
| FILM APPEARANCE | | | | | | |
| INITIAL | A | A | A | A | A | A |
| 1 DAY | A | B,C | A | B,C | A | B,C |
| 3 DAYS | A | B,C | A | B,C | A | B,C |
| 5 DAYS | A | D | A | B,C | A | B,C |

7 Indicates time immersed in solvent before observation.

A - Film was clear.

B - Film was cloudy.

C - Material was breaking down or dissolving. Probably would have dissolved with agitation. Accurate measurement was not possible.

D - Completely dissolved.

E - Yellow tint to film.

Methyl Ethyl Ketone Resistance of Aqueous Polyurethane Dispersion Films

| EXAMPLE | 1 | CE 1 | 2 | CE 2 | 3 | CE 3 |
|---|---|---|---|---|---|---|
| %t,t-rMDI | 100 | 20 | 100 | 20 | 100 | 20 |
| % HARD SEGMENT | 30 | | 40 | | 45 | |
| POLYOL MW | 1700 | | 1700 | | 1700 | |
| CHAIN EXTENDER | -- | | XB | | NPG | |
| % VOLUME SWELL[7] | | | | | | |
| 1 DAY | 50% | D | 25% | D | 25% | D |
| 3 DAYS | 50% | D | 25% | D | 25% | D |
| 5 DAYS | 50% | D | 25% | D | 25% | D |
| FILM APPEARANCE | | | | | | |
| INITIAL | A | A | A | A | A | A |
| 1 DAY | A | D | A | D | A | D |
| 3 DAYS | A | D | A | D | A | D |
| 5 DAYS | A,E | D | A,E | D | A,E | D |

7 Indicates time immersed in solvent before observation.

A - Film was clear.

B - Film was cloudy.

C - Material was breaking down or dissolving. Probably would have dissolved with agitation. Accurate measurement was not possible.

D - Completely dissolved.

E - Yellow tint to film.

## Claims

1. An aqueous polyurethane-urea dispersion wherein the polyurethane-urea is based on the reaction product of

   a) an isocyanate component comprising bis-(4-isocyanatocyclohexyl)-methane having an average trans,trans isomer content of at least 35% by weight, based on the weight of bis-(4-isocyanatocyclohexyl)-methane with

   b) an isocyanate-reactive component.

2. The dispersion of Claim 1 wherein said polyurethane-urea contains 10 to 120 milliequivalents per 100 grams of polyurethane-ureas of chemically incorporated anionic groups and up to about 10% by weight, based on the weight of said polyurethane-urea, of lateral and/or terminal hydrophilic chains containing ethylene oxide units.

3. The dispersion of Claim 2 wherein at least about 80% of said anionic groups are carboxylate groups neutralized with a volatile organic base.

4. The dispersion of Claim 3 wherein said volatile organic base is a tertiary amine.

5. The dispersion of Claim 1 wherein said average trans,trans isomer content is at least 48% by weight, based on the weight of bis-(4-isocyanatocyclohexyl)-methane.

6. The dispersion of Claim 1 wherein said average trans,trans isomer content is at least 70% by weight, based on the weight of bis-(4-isocyanatocyclohexyl)-methane.

7. The dispersion of Claim 1 wherein said average trans,trans isomer content is at least 95% by weight, based on the weight of bis-(4-isocyanatocyclohexyl)-methane.

8. An aqueous polyurethane-urea dispersion wherein the polyurethane-ureas contain 10 to 120 milliequivalents per 100 grams of polyurethane-urea of chemically incorporated anionic groups and up to about 10% by weight, based on the weight of said polyurethane-ureas, of lateral and/or terminal hydrophilic chains containing ethylene oxide units and are based on the reaction product of
   a) an isocyanate component comprising bis-(4-isocyanatocyclohexyl)-methane having an average trans,trans isomer content of at least 35% by weight, based on the weight of bis-(4-isocyanatocyclohexyl)-methane with
   b) an isocyanate-reactive component.

9. The dispersion of Claim 8 wherein at least about 80% of said anionic groups are carboxylate groups neutralized with a volatile organic base.

10. The dispersion of Claim 9 wherein said volatile organic bases are tertiary amines.

11. The dispersion of Claim 8 wherein said average trans,trans isomer content is at least 48% by weight, based on the weight of bis-(4-isocyanatocyclohexyl)-methane.

12. The dispersion of Claim 8 wherein said average trans,trans isomer content is at least 70% by weight, based on the weight of bis-(4-isocyanatocyclohexyl)-methane.

13. The dispersion of Claim 8 wherein said average trans,trans isomer content is at least 95% by weight, based on the weight of bis-(4-isocyanatocyclohexyl)-methane.

14. A coating or film prepared from the aqueous polyurethane-urea dispersion of Claim 1.

15. A coating or film prepared from the aqueous polyurethane-urea dispersion of Claim 8.

**Patentansprüche**

1. Wäßrige Polyurethanharnstoffdispersion, wobei der Polyurethanharnstoff auf dem Produkt der Reaktion von
   a) einer Isocyanatkomponente, die Bis(4-isocyanatocyclohexyl)methan mit einem durchschnittlichen Gehalt an trans,trans-Isomer von wenigstens 35 Gew.-%, bezogen auf das Gewicht des Bis(4-isocyanatocyclohexyl)methans, umfaßt, mit
   b) einer isocyanatreaktiven Komponente
   
   beruht.

2. Dispersion gemäß Anspruch 1, wobei der Polyurethanharnstoff 10 bis 120 Milliäquivalente pro 100 g Polyurethanharnstoffe chemisch eingebauter anionischer Gruppen und bis zu etwa 10 Gew.-%, bezogen auf das Gewicht des Polyurethanharnstoffs, lateraler und/oder terminaler hydrophiler Ketten, die Ethylenoxideinheiten enthalten, enthält.

3. Dispersion gemäß Anspruch 2, wobei wenigstens etwa 80% der anionischen Gruppen Carboxylatgruppen sind, die mit einer flüchtigen organischen Base neutralisiert sind.

4. Dispersion gemäß Anspruch 3, wobei die flüchtige organische Base ein tertiäres Amin ist.

**5.** Dispersion gemäß Anspruch 1, wobei der durchschnittliche Gehalt an trans,trans-Isomer wenigstens 48 Gew.-%, bezogen auf das Gewicht des Bis(4-isocyanatocyclohexyl)methans, beträgt.

**6.** Dispersion gemäß Anspruch 1, wobei der durchschnittliche Gehalt an trans,trans-Isomer wenigstens 70 Gew.-%, bezogen auf das Gewicht des Bis(4-isocyanatocyclohexyl)methans, beträgt.

**7.** Dispersion gemäß Anspruch 1, wobei der durchschnittliche Gehalt an trans,trans-Isomer wenigstens 95 Gew.-%, bezogen auf das Gewicht des Bis(4-isocyanatocyclohexyl)methans, beträgt.

**8.** Wäßrige Polyurethanharnstoffdispersion, wobei die Polyurethanharnstoffe 10 bis 120 Milliäquivalente pro 100 g Polyurethanharnstoff chemisch eingebauter anionischer Gruppen und bis zu etwa 10 Gew.-%, bezogen auf das Gewicht der Polyurethanharnstoffe, lateraler und/oder terminaler hydrophiler Ketten, die Ethylenoxideinheiten enthalten, enthalten und auf dem Produkt der Reaktion von
a) einer Isocyanatkomponente, die Bis(4-isocyanatocyclohexyl)methan mit einem durchschnittlichen Gehalt an trans,trans-Isomer von wenigstens 35 Gew.-%, bezogen auf das Gewicht des Bis(4-isocyanatocyclohexyl)methans, umfaßt, mit
b) einer isocyanatreaktiven Komponente
beruhen.

**9.** Dispersion gemäß Anspruch 8, wobei wenigstens etwa 80% der anionischen Gruppen Carboxylatgruppen sind, die mit einer flüchtigen organischen Base neutralisiert sind.

**10.** Dispersion gemäß Anspruch 9, wobei die flüchtige organische Base ein tertiäres Amin ist.

**11.** Dispersion gemäß Anspruch 8, wobei der durchschnittliche Gehalt an trans,trans-Isomer wenigstens 48 Gew.-%, bezogen auf das Gewicht des Bis(4-isocyanatocyclohexyl)methans, beträgt.

**12.** Dispersion gemäß Anspruch 8, wobei der durchschnittliche Gehalt an trans,trans-Isomer wenigstens 70 Gew.-%, bezogen auf das Gewicht des Bis(4-isocyanatocyclohexyl)methans, beträgt.

**13.** Dispersion gemäß Anspruch 8, wobei der durchschnittliche Gehalt an trans,trans-Isomer wenigstens 95 Gew.-%, bezogen auf das Gewicht des Bis(4-isocyanatocyclohexyl)methans, beträgt.

**14.** Überzug oder Film, der aus der wäßrigen Polyurethanharnstoffdispersion gemäß Anspruch 1 hergestellt ist.

**15.** Überzug oder Film, der aus der wäßrigen Polyurethanharnstoffdispersion gemäß Anspruch 8 hergestellt ist.

## Revendications

**1.** Dispersion aqueuse de polyuréthanne-urée dans laquelle la polyuréthanne-urée est basée sur le produit de la réaction de
a) un composé isocyanate comprenant le bis(4-isocyanatocyclohexyl)méthane ayant une teneur moyenne en isomère trans,trans d'au moins 35% en poids, par rapport au poids du bis(4-isocyanatocyclohexyl)méthane, avec
b) un composé réactif avec l'isocyanate.

**2.** Dispersion selon la revendication 1, dans laquelle ladite polyuréthanne-urée contient 10 à 120 milliéquivalents par 100 grammes de polyuréthanne-urée de radicaux anioniques incorporés chimiquement et jusqu'à environ 10% en poids, par rapport au poids de ladite polyuréthanne-urée, d'unités d'éthylèneoxyde contenant des chaînes hydrophiles latérales ou terminales.

**3.** Dispersion selon la revendication 2, dans laquelle au moins environ 80% desdits radicaux anioniques sont des radicaux carboxylates neutralisés par une base organique volatile.

**4.** Dispersion selon la revendication 3, dans laquelle ladite base organique volatile est une amine tertiaire.

**5.** Dispersion selon la revendication 1, dans laquelle ladite teneur moyenne en isomère trans,trans est d'au moins 48% en poids, par rapport au poids du bis(4-isocyanatocyclohexyl)méthane.

**6.** Dispersion selon la revendication 1, dans laquelle ladite teneur moyenne en isomère trans,trans est d'au moins 70% en poids, par rapport au poids du bis(4-isocyanatocyclohexyl)méthane.

**7.** Dispersion selon la revendication 1, dans laquelle ladite teneur moyenne en isomère trans,trans est d'au moins 95% en poids, par rapport au poids du bis(4-isocyanatocyclohexyl)méthane.

**8.** Dispersion aqueuse de polyuréthanne-urée dans laquelle la (les) polyuréthanne-urée(s) contient (contiennent) 10 à 120 milliéquivalents par 100 grammes de polyuréthanne-urée de radicaux anioniques incorporés chimiquement et jusqu'à environ 10% en poids, par rapport au poids de ladite (desdites) polyuréthanne-urée(s), d'unités d'éthylèneoxyde contenant des chaînes hydrophiles latérales ou terminales et est (sont) basée(s) sur le produit de la réaction de

a) un composé isocyanate comprenant le bis(4-isocyanatocyclohexyl)méthane ayant une teneur moyenne en isomère trans,trans d'au moins 35% en poids, par rapport au bis(4-isocyanatocyclohexyl)méthane, avec

b) un composé réactif avec l'isocyanate.

**9.** Dispersion selon la revendication 8, dans laquelle au moins environ 80% desdits radicaux anioniques sont des radicaux carboxylates neutralisés par une base organique volatile.

**10.** Dispersion selon la revendication 9, dans laquelle lesdites bases organiques volatiles sont des amines tertiaires.

**11.** Dispersion selon la revendication 8, dans laquelle ladite teneur moyenne en isomère trans,trans est d'au moins 48% en poids, par rapport au poids du bis(4-isocyanatocyclohexyl)méthane.

**12.** Dispersion selon la revendication 8, dans laquelle ladite teneur moyenne en isomère trans,trans est d'au moins 70% en poids, par rapport au poids du bis(4-isocyanatocyclohexyl)méthane.

**13.** Dispersion selon la revendication 8, dans laquelle ladite teneur moyenne en isomère trans,trans est d'au moins 95% en poids, par rapport au poids du bis(4-isocyanatocyclohexyl)méthane.

**14.** Revêtement ou film préparé à partir de la dispersion aqueuse de polyuréthanne-urée de la revendication 1.

**15.** Revêtement ou film préparé à partir de la dispersion aqueuse de polyuréthanne-urée de la revendication 8.